# EUROPÄISCHE PATENTANMELDUNG

(11) **EP 4 563 501 A1**
(43) Veröffentlichungstag der Anmeldung: **04.06.2025**
(21) Anmeldenummer: 24215864.0
(22) Anmeldetag: 27.11.2024
(51) Int. Cl.: B65G 15/10, B65G 15/50, B65G 47/08, B65G 47/244

(54) **BATTERIEZELLEN-ZUFÜHRUNG MIT INTEGRIERTER FUNKTION DER LAGEORIENTIERUNG**

(30) Priorität: 29.11.2023 DE 102023133429
(71) Anmelder: teamtechnik Maschinen und Anlagen GmbH, 71691 Freiberg (DE)
(72) Erfinder: Breitenbücher, Dieter, 70794 Filderstadt (DE)
(74) Vertreter: Witte, Weller & Partner Patentanwälte mbB

(57) **Zusammenfassung**

Die Erfindung betrifft eine Vorrichtung zum Transport von zylindrischen Bauteilen, insbesondere Batteriezellen, von einem Startbereich zu einem Zielbereich, mit einer ersten Transporteinrichtung (12) mit mehreren Transportriemen (20.1-20.n), die sich vom Starbereich (16) zum Zielbereich (18) erstrecken und beabstandet zueinander angeordnet sind; einer Antriebseinrichtung (30), die mit den Transportriemen (20) gekoppelt und ausgelegt ist, Transportriemen, insbesondere benachbarte Transportriemen, mit unterschiedlichen Geschwindigkeiten anzutreiben, so dass die Bauteile (24) zumindest im Zielbereich jeweils zwischen zwei benachbarten Transportriemen (20) liegen; und einer Befülleinrichtung (70), die im Startbereich Bauteile in ihrer Ausrichtung ungeordnet auf die Transportriemen (20) bringt. Die Erfindung betrifft ferner ein Verfahren zum Ausrichten von zylindrischen Bauteilen.

## Beschreibung

Die vorliegende Erfindung betrifft eine Transportvorrichtung zum Transport von zylindrischen Bauteilen, insbesondere Batteriezellen. Die Erfindung betrifft zudem ein Verfahren zum Ausrichten von zylindrischen Bauteilen, insbesondere Batteriezellen.

Gerade im Bereich der Batteriefertigung ist es notwendig, zylindrische Bauteile, nämlich zylindrische Batteriezellen, die bspw. als Schüttgut ungeordnet hinsichtlich ihrer Lage bereitgestellt werden, zueinander auszurichten, um sie bspw. in ein Gehäuse einer größeren Batterie in richtiger Pol-Lage einzusetzen.

Für das Ausrichten der Batteriezellen wird eine einfache und kostengünstige Lösung gesucht. Zudem soll der Transport schonend gerade für empfindliche Bauteile erfolgen, um Beschädigungen zu vermeiden

Es ist folglich eine Aufgabe der vorliegenden Erfindung, eine Transportvorrichtung zu schaffen, die auf einfache und kostengünstige Weise eine Ausrichtung von zylindrischen Bauteilen, insbesondere Batteriezellen, realisiert.

Diese Aufgabe wird gelöst durch eine Vorrichtung, wie sie in Anspruch 1 definiert ist, und durch ein Verfahren, wie es in Anspruch 15 definiert ist.

Die Vorrichtung zum Transport von zylindrischen Bauteilen, insbesondere Batteriezellen, von einem Startbereich zu einem Zielbereich, weist auf: eine erste Transporteinrichtung mit mehreren Transportriemen, die beabstandet zueinander angeordnet sind und eine Transportstrecke vom Starbereich zum Zielbereich bilden; eine Antriebseinrichtung, die mit den Transportriemen gekoppelt und ausgelegt ist, Transportriemen, insbesondere benachbarte Transportriemen, mit unterschiedlichen Geschwindigkeiten anzutreiben, so dass die Bauteile zumindest im Zielbereich jeweils zwischen zwei benachbarten Transportriemen liegen; und eine Befülleinrichtung, die im Startbereich Bauteile in ihrer Ausrichtung ungeordnet auf die Transportriemen bringt.

Der Antrieb der Transportriemen mit unterschiedlichen Geschwindigkeiten hat zur Folge, dass die Bauteile, sofern sie noch quer auf den Transportriemen liegen, gedreht werden. Diese Drehung hat zur Folge, dass die Bauteile zumindest im Zielbereich ausgerichtet im Zwischenraum zwischen zwei Transportriemen liegen. Diese Lösung erfordert lediglich die Transportriemen unterschiedlich schnell anzutreiben, was eine einfache und kostengünstige Lösung zulässt.

Die Aufgabe wird damit vollkommen gelöst.

In einer bevorzugten Weiterbildung erstrecken sich die Transportriemen vom Startbereich zum Endbereich. D.h. mit anderen Worten, dass die Transportriemen jeweils über die gesamte Transportstrecke verlaufen. Der Vorteil dieser Ausgestaltung liegt in einem einfachen Aufbau.

In einer alternativen Weiterbildung wird die Transportstrecke zwischen Startbereich und Endbereich von mehrere hintereinander angeordneten Transportriemen gebildet. Der Vorteil dieser Lösung ist darin zu sehen, dass die Flexibilität der Transporteinrichtung erhöht werden kann. So lassen sich unterschiedliche Geschwindigkeiten auch in Längsrichtung, also in Transportrichtung erreichen.

In einer bevorzugten Weiterbildung weisen die Transportriemen einen runden Querschnitt auf. Dieser Querschnitt hat den Vorteil, dass er das Überführen der Bauteile in die Zwischenräume zwischen den Transportriemen erleichtert wird.

In einer bevorzugten Weiterbildung liegen die Transportriemen in einer Ebene. Diese Maßnahme hat sich ebenfalls als vorteilhaft herausgestellt. Alternativ können die Transportriemen aber auch in unterschiedlichen Transportebenen, vorzugsweise zwei Transportebenen, liegen, wobei die Transportriemen paarweise abwechselnd in der einen oder der anderen Transportebene liegen.

In einer bevorzugten Weiterbildung weist die Antriebseinrichtung zumindest eine Getriebeeinheit aufweist, die ausgelegt ist, eine erste Untergruppe von Transportriemen mit einer ersten Geschwindigkeit und eine zweite Untergruppe von Transportriemen mit einer zweiten Geschwindigkeit anzutreiben, wobei sich Transportriemen der ersten Untergruppe und Transportriemen der zweiten Untergruppe abwechseln. Die verschiedenen Geschwindigkeiten der Transportriemen können alternativ auch über einen Antrieb realisiert werden, der Riemenscheiben mit unterschiedlichen Durchmessern für die unterschiedlichen Geschwindigkeiten der Transportriemen antreibt. Bevorzugt nimmt die Geschwindigkeit -quer zur Transportrichtung betrachtet- von außen nach innen oder von innen nach außen ab. Weiter bevorzugt ändert sich die Geschwindigkeit der jeweiligen Transportriemen -quer zur Transportrichtung betrachtet- abwechselnd.

Alternativ weist die Antriebseinrichtung zwei Antriebsmotoren, wobei ein Antriebsmotor eine erste Untergruppe von Transportriemen mit einer ersten Geschwindigkeit und der andere Antriebsmotor eine zweite Untergruppe von Transportriemen mit einer zweiten Geschwindigkeit antreibt, wobei sich Transportriemen der ersten Untergruppe und Transportriemen der zweiten Untergruppe abwechseln.

Mit beiden alternativen Maßnahmen lassen sich kostengünstige und dennoch effektive Lösungen zum Ausrichten der Bauteile realisieren.

In einer bevorzugten Weiterbildung ist der Abstand der Transportriemen zueinander einstellbar. Beispielsweise lassen sich die Abstände einzeln einstellen, oder alternativ gruppenweise, oder für alle gemeinsam.

Die Maßnahme hat den Vorteil, dass die Transportvorrichtung sehr flexibel einsetzbar wird, da auf unterschiedliche Baugrößen der Bauteile schnell reagiert werden kann.

In einer bevorzugten Weiterbildung weisen die Transportriemen unterschiedliche Oberflächenbeschaffenheiten, insbesondere unterschiedliche Reibwerte, auf. Weiter bevorzugt weisen die Transportriemen unterschiedliche Durchmesser auf.

Diese Maßnahmen verbessern nochmals die Ausrichtung der Bauteile, insbesondere das Drehen der Bauteile, um sie in den Zwischenraum zwischen zwei Transportriemen zu führen.

In einer bevorzugten Weiterbildung weist die Befülleinrichtung einen Bunker zur Aufnahme von vielen Bauteilen und ein Förderband auf, wobei das Förderband im Startbereich endet, um Bauteile auf die Transportriemen zu bringen, bspw. zu schütten.

In einer bevorzugten Weiterbildung ist eine Verteilungseinrichtung vorgesehen, die ausgelegt ist, Bauteile quer zur Transportrichtung zu verlagern. Weiter bevorzugt, weist die Verteilungseinrichtung zwischen Transportriemen vorgesehene Ablenkelemente auf, die ausgelegt sind, Bauteile quer zur Transportrichtung gesteuert zu verlagern. Die Ablenkelemente sind bevorzugt als Leitbleche ausgestaltet. Die Ablenkelemente können aber auch in Form von Luftimpulsgebern, Düsen, Magnetfeld-Erzeugungsvorrichtungen bereitgestellt werden. Ebenso wäre es möglich, eine oder mehrere Rollen, die auf die Transportriemen oder auf die Bauteile einwirken, vorzusehen. Die Rollen können dabei selbstangetrieben oder passiv mitlaufend gestaltet sein. Schließlich wäre es auch möglich, Bürsten vorzusehen, die seitlich, von oben oder von unten zustellbar sind. Die Bürsten können so ausgeführt sein, dass elektrostatische Aufladung abgeleitet wird.

Weiter bevorzugt ist eine Steuereinrichtung vorgesehen, die die Verteilungseinrichtung derart ansteuert, dass die Bauteile quer zur Transportrichtung verteilt werden. Die Steuereinheit erhält bevorzugt Informationen von Sensorik, insbesondere optische Sensorik, wie Kamerasysteme mit Bildverarbeitung und Lasermesseinrichtungen, oder Ultraschallsensoren, Radarsensoren, etc.. Abhängig von den bereitgestellten Daten der Sensorik wird die Verteilungseinrichtung gesteuert.

Diese Maßnahmen haben den Vorteil, dass die Bauteile über alle Zwischenräume zwischen Transportriemen gleichmäßig verteilt werden können. Die Ablenkelemente ermöglichen gesteuert ein auftreffendes Bauteil in einen benachbarten Zwischenraum zu führen. Um zu verhindern, dass Bauteile seitlich aus der Transportvorrichtung herausfallen, sind bevorzugt seitliche Führungselemente bzw. Begrenzungen vorgesehen.

In einer bevorzugten Weiterbildung ist im Zielbereich eine zwischen zumindest zwei Positionen bewegbare Halteeinrichtung vorgesehen und ausgelegt, in der ersten Position die in den Zielbereich transportierten Bauteile zu stoppen und diese Bauteile in der zweiten Position für einen Weitertransport freizugeben. Weiter bevorzugt schließt sich im Zielbereich an die erste Transporteinrichtung eine zweite Transporteinrichtung zum Transport von Werkstückträgern an, derart, dass von der Halteeinrichtung freigegebene Bauteile in einen Werkstückträger überführbar sind. Weiter bevorzugt transportiert die zweite Transporteinrichtung die Werkstückträger mit den Bauteilen in einen Übergabebereich, in welchem eine Übergabeeinrichtung vorgesehen und ausgelegt ist, die Bauteile von einem Werkstückträger in einer gewünschten Längsausrichtung aufzunehmen.

Diese Maßnahmen haben sich als besonders vorteilhaft herausgestellt. Sie erlauben mit einfachen Mitteln, die Bauteile, hier insbesondere Batteriezellen, mit einer gewünschten Pol-Lage von den Werkstückträgern aufzunehmen und bspw. in einen nachfolgenden Prozess zu übergeben.

Die Aufgabe der Erfindung wird auch gelöst durch ein Verfahren zum Ausrichten von zylindrischen Bauteilen, insbesondere Batteriezellen, mit den Schritten: Aufbringen der Bauteile in einem Startbereich einer Transporteinrichtung, die mehrere beabstandet zueinander angeordnete Transportriemen aufweist, Transport der Bauteile mittels der Transporteinrichtung zu einem Zielbereich, Drehen der Bauteile auf den Transportriemen, so dass jedes Bauteil vollständig zwischen zwei benachbarten Transportriemen liegt, indem benachbarte Transportriemen mit unterschiedlichen Geschwindigkeiten angetrieben werden.

Die Vorteile dieses Verfahrens entsprechen den vorgenannten Vorteilen, so dass auf eine Wiederholung an dieser Stelle verzichtet werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung. Dabei zeigen:
- Figur 1: eine schematische Darstellung einer Transportvorrichtung;
- Figur 2a: eine Detailansicht des Ausschnitts II von Figur 1;
- Figur 2b: eine schematische Darstellung einer alternativen Anordnung von Transportriemen;
- Figur 3: eine Detailansicht des Ausschnitts III von Figur 1;
- Figur 4: eine Detailansicht des Ausschnitts IV von Figur 1;
- Figur 5: eine Detailansicht des Ausschnitts V von Figur 1;
- Figur 6: eine Detailansicht des Ausschnitts VI von Figur 1;
- Figur 7: eine Detailansicht der Übergabeeinrichtung aus Ausschnitt V von Figur 1;
- Figur 8: eine schematische perspektivische Darstellung der erfindungsgemäßen Transportvorrichtung; und
- Figur 9: eine schematische perspektivische Darstellung einer Transportvorrichtung gemäß einem weiteren Ausführungsbeispiel.

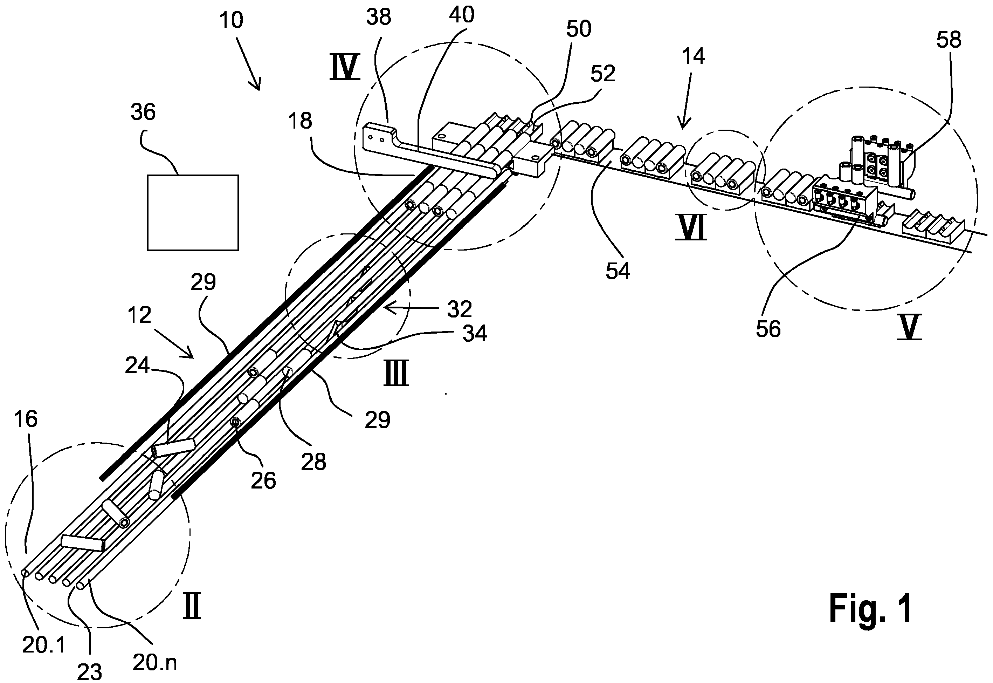

In Figur 1 ist eine Transportvorrichtung in schematischer Darstellung gezeigt und mit dem Bezugszeichen 10 gekennzeichnet. Die Transportvorrichtung 10 dient dazu, zylindrische Bauteile 22, insbesondere Batteriezellen 24 (nachfolgend kurz Zellen genannt), zu transportieren, zueinander auszurichten und schließlich in einer gewünschten Längsausrichtung bzw. Polung aufzunehmen. Eine solche Transportvorrichtung 10 wird beispielsweise in einer Batteriezellen-Fertigung eingesetzt, um einzelne Zellen zu einem Batteriezellen-Paket zusammenzuführen. An dieser Stelle sei angemerkt, dass die Darstellung in den Figuren rein schematischer Natur ist und nur die für das Verständnis der Erfindung erforderlichen Bauteile zeigt.

Die Transportvorrichtung 10 weist eine erste Transporteinrichtung 12 und eine zweite Transporteinrichtung 14 auf, wobei sich die zweite Transporteinrichtung 14 bevorzugt rechtwinklig zu der ersten Transporteinrichtung 12 erstreckt. Die beiden Transporteinrichtung 12 und 14 sind zueinander so angeordnet, dass eine Zelle 24 von einem Startbereich 16 zu einem Zielbereich 18 der ersten Transporteinrichtung und von dort auf die zweite Transporteinrichtung 14 transportiert werden kann. D. h. mit anderen Worten, dass die Zellen 24 im Zielbereich 18, d. h. am Ende der ersten Transporteinrichtung 12 auf die zweite Transporteinrichtung 14 überführt werden.

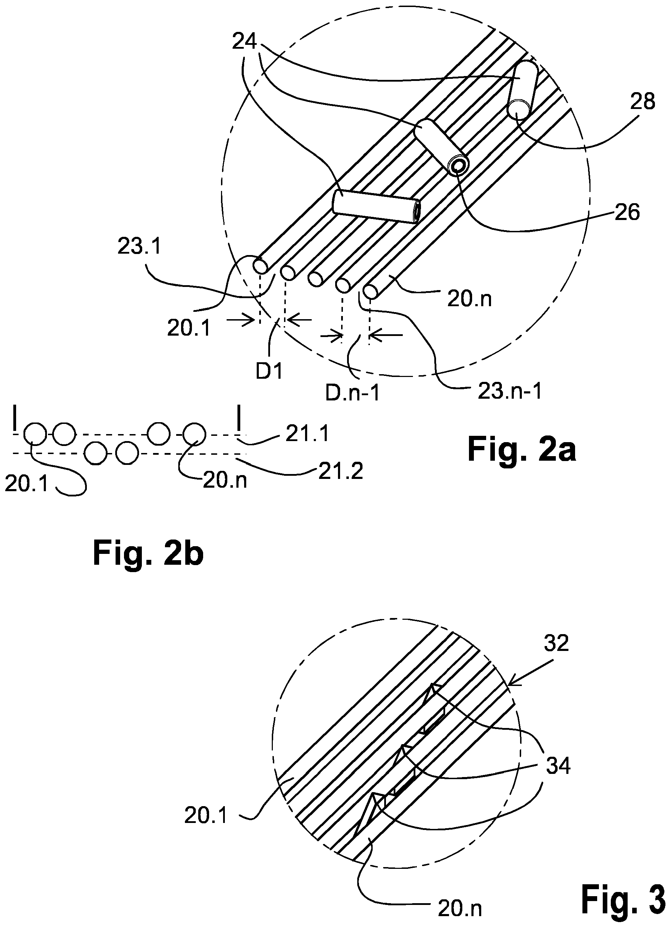

Die erste Transporteinrichtung 12 weist mehrere Transportriemen 20.1-20.n auf, die parallel zueinander und bevorzugt in gleichen Abständen D1 bis D.n-1 (vgl. Fig. 2a) angeordnet sind und zwischen sich Spuren 23.1 bis 23.n-1 bilden. Im vorliegenden Ausführungsbeispiel liegen die Transportriemen 20.1-20.n in einer Transportebene 21. Die Transportriemen 20 weisen bevorzugt einen runden Querschnitt auf, können jedoch je nach Anwendungsfall auch eine andere Querschnittsform besitzen. Die Transportriemen 20 sind als Endlosriemen ausgeführt, die über nicht dargestellte Rollen bzw. Scheiben geführt sind. Zumindest eine dieser Rollen wird über einen Antrieb, bspw. eine elektrische Motor-Getriebe-Einheit angetrieben. Die einzelnen Transportriemen erstrecken sich bevorzugt über die gesamte Länge zwischen Startbereich und Endbereich. Alternativ können auch mehrere hintereinander angeordnete Transportriemen die Transportstrecke zwischen Startbereich und Endbereich bilden.

Wie bereits erwähnt, sind die Abstände der Transportriemen 20, und damit die Breite der Spuren 23, bevorzugt gleich ausgestaltet, wobei der Abstand von dem Durchmesser der Zellen 24 abhängt. Der Abstand ist kleiner als der Durchmesser der Zellen 24. An dieser Stelle sei jedoch angemerkt, dass die Transporteinrichtung 12 so ausgelegt sein kann, dass die Abstände der einzelnen Transportriemen 20 zueinander entweder gemeinsam für alle oder einzeln einstellbar sind. Damit kann die Transporteinrichtung 12 auf unterschiedliche Größen von Zellen angepasst werden. D. h., werden im Durchmesser kleinere Zellen 24 eingesetzt, werden die Abstände verringert, bei größeren Durchmessern werden die Abstände vergrößert, so dass die Breite der Spuren 23 immer kleiner als der Durchmesser der Zellen ist.

Die Transportriemen 20 werden so angetrieben, dass sich die auf den Transportriemen liegenden Zellen 24 vom Startbereich 16 zum Zielbereich 18 bewegen. Um zu verhindern, dass Zellen 24 seitlich von den Transportriemen 20 fallen, weist die Transporteinrichtung 12 seitliche Begrenzungen 29 auf, die benachbart zu den äußeren Transportriemen 20.1 und 20.n angeordnet sind.

In Figur 2a ist der Abschnitt II von Figur 1 nochmals in vergrößerter Darstellung gezeigt. Deutlich zu erkennen sind hier insgesamt fünf Transportriemen 20.1-20.5, die vier Spuren 23 bilden, wobei die Anzahl n der Transportriemen und damit die Anzahl n-1 von Spuren 23 je nach Anwendungsfall gewählt wird. Die Anzahl der Transportriemen hängt im Wesentlichen davon ab, wie viele Spuren 23 oder anders ausgedrückt nebeneinanderliegende Zellen 24 zur zweiten Transporteinrichtung überführt werden sollen. Sollen beispielsweise m Zellen nebeneinander liegend überführt werden, müssen m+1 Transportriemen vorgesehen sein. Im vorliegenden Ausführungsbeispiel können folglich bei fünf Transportriemen vier nebeneinanderliegende Zellen in vier Spuren 23 in die zweite Transporteinrichtung überführt werden.

Wie sich ebenfalls aus Figur 2a ergibt, werden die Zellen 24 hinsichtlich ihrer Längsausrichtung ungeordnet auf die Transportriemen 20 aufgebracht. D. h. mit anderen Worten, dass die Längsachse der Zellen 24 nicht parallel zu den Transportriemen 20 liegen. Während des Transports sollen diese Zellen 24 jedoch so ausgerichtet werden, dass deren Längsachsen parallel zu den Transportriemen 20 liegen, was bedeutet, dass die Zellen 24 in die Spuren 23 geführt werden sollen. Die Zellen müssen folglich während des Transports um eine Achse senkrecht zur Transportebene gedreht werden.

Dieses Drehen und damit auch Überführen in eine Spur 23 wird erfindungsgemäß dadurch erzielt, dass die Transportriemen 20.1 bis 20.n mit unterschiedlichen Geschwindigkeiten bewegt werden. Beispielsweise werden benachbarte Transportriemen 20 unterschiedlich schnell bewegt. Bei einer bevorzugten Ausgestaltung werden beispielsweise die Transportriemen 20.1, 20.3, 20.n mit einer ersten Geschwindigkeit v1 bewegt, während die Transportriemen 20.2 und 20.n-1 mit einer zweiten Geschwindigkeit v2 bewegt werden, wobei v1 größer oder kleiner als v2, aber nicht gleich, ist. Durch die unterschiedlichen Geschwindigkeiten benachbarter Transportriemen 20 wirkt ein Drehmoment auf die Zellen 24 (sofern sie nicht bereits parallel zu den Transportriemen in einer Spur 23 liegen), das ein Drehen hervorruft. Bei einer entsprechenden Länge der Transportstrecke werden die Zellen 24 während des Transports ausgerichtet und in die Spuren 23 geführt, sodass sie zumindest im Zielbereich 18 alle parallel zu den Transportriemen liegen, d. h. jeweils zwischen zwei benachbarten Transportriemen.

Um zu gewährleisten, dass die Zellen 24 gleichmäßig über die Breite der ersten Transporteinrichtung 12 verteilt sind, d. h. im Zielbereich 18 sind alle Spuren mit Zellen belegt, ist eine Verteilungseinrichtung 32 vorgesehen, die über Aktuatoren bewegbare Ablenkelemente 34 aufweist. Diese Ablenkelemente liegen jeweils zwischen zwei benachbarten Transportriemen, d.h. jeweils in einer Spur 23, und können über Aktuatoren nach oben in die Spur 23, d. h. in die Bewegungsbahn der Zellen bewegt werden. Mithilfe der Ablenkelemente 34 kann eine Zelle 24 in die benachbarte Spur 23 bewegt werden. Um über diese Verteilungseinrichtung 32 eine gleichmäßige Verteilung der Zellen über alle Spuren 23.1 bis 23.n-1 zu erzielen, ist eine Steuerung 36 erforderlich, die beispielsweise Bilder von einer Kamera erhält, aus denen über entsprechende Software die Verteilung der Zellen 24 ermittelt werden kann.

An dieser Stelle sei noch angemerkt, dass die Steuerung 36 bevorzugt auch die Geschwindigkeit der Transportriemen 20 einstellen kann, sodass durch Reduzieren oder Erhöhen der Differenzgeschwindigkeit (v1-v2) der Transportriemen Einfluss auf die Ausrichtung der Zellen genommen werden kann. Durch entsprechende Wahl der Materialien der Transportriemen 20, insbesondere deren Reibfaktoren, kann ebenfalls Einfluss auf das Überführen der Zellen in die Spuren 23 genommen werden.

Ferner ist es auch möglich, wie in Fig. 2b dargestellt, die Transportriemen 20.1 bis 20.n in unterschiedlichen Ebenen 21.1, 21.2 anzuordnen. Beispielsweise können jeweils Paare von Transportriemen abwechselnd in einer ersten Transportebene 21.1 und einer zweiten Transportebene 21.2 angeordnet sein.

In der Detaildarstellung in Figur 3 ist die Verteilungseinrichtung 32 deutlicher gezeigt. Hier sind insbesondere die Ablenkelemente 34 zu erkennen, die sich nach oben zwischen zwei benachbarten Transportriemen, d.h. in eine Spur 23 bewegen lassen. Insbesondere haben die Ablenkelemente 34 eine schräge Flanke, auf die die Zelle 24 trifft und dadurch in die benachbarte Spur geführt wird. Auch wenn in Figur 3 lediglich drei Ablenkelemente 34 dargestellt sind, sind bevorzugt für jede Spur 23 der Transporteinrichtung 12 Ablenkelemente 34 vorgesehen. Die Ablenkelemente 34 können daneben auch dazu benutzt werden, bestimmte Spuren zu blockieren. Hat die Transporteinrichtung bspw. mehr Spuren als benötigt, können insbesondere außenliegende Spuren blockiert und folglich geschlossen werden.

Am Ende der ersten Transporteinrichtung 12 im Zielbereich 18 ist eine Halteeinrichtung 38 vorgesehen, die ein balkenförmiges Element 40 aufweist. Dieses balkenförmige Element 40 erstreckt sich quer über die Transporteinrichtung 12, d. h. die Transportriemen 20.1-20.n. Das Element 40 ist vorgesehen, um die in den mehreren Spuren 23 liegenden Zellen zueinander auszurichten, in dem es in seiner unteren Position ähnlich einem Anschlag für die Zellen wirkt. Wird das Element 40 beispielsweise nach oben bewegt, werden die Zellen in den Spuren 23 freigegeben und können in Richtung der zweiten Transporteinrichtung 14 transportiert und übergeben werden.

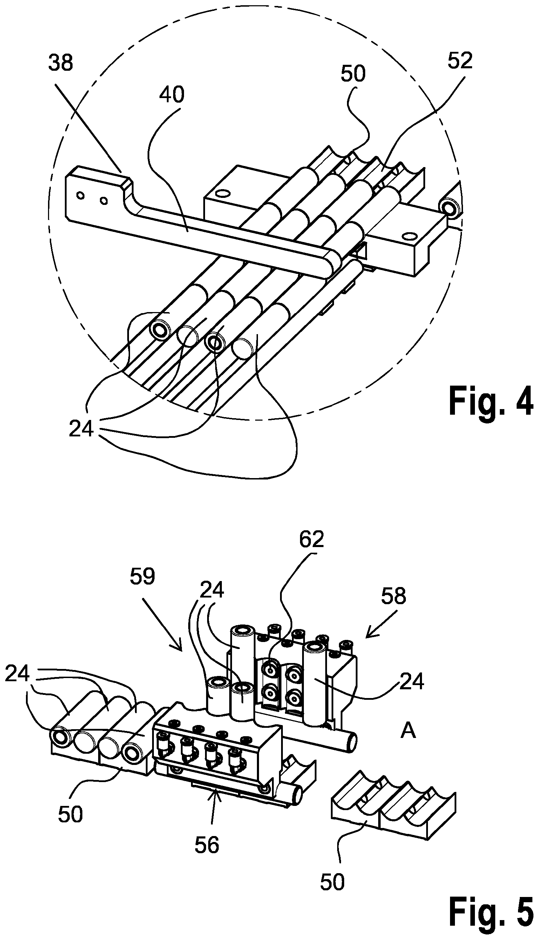

In Figur 4 ist dieser Übergabebereich nochmals im Detail dargestellt. Es ist gut zu erkennen, dass die in den Spuren 23 liegenden Zellen 24 zueinander ausgerichtet sind, sodass sie beispielsweise auf einen Werkstückträger 50, und dort in teilzylindrische Aufnahmen 52, überführt werden können. Der Werkstückträger 50 liegt auf einem Transportband 24 der zweiten Transporteinrichtung 14, wie dies in Figur 1 dargestellt ist.

Die im vorliegenden Fall vier Zellen 24 auf einem Werkstückträger 50 werden weitertransportiert in einen Aufnahmebereich, in welchem zwei Handhabungselemente 56, 58 einer Übergabeeinrichtung 59 vorgesehen sind. Diese im Detail in Figur 5 dargestellten Handhabungselemente 56, 58 dienen dazu, die Zellen von einem Werkstückträger 50 für eine Weiterverarbeitung aufzunehmen und zwar so, dass die Zellen 24 eine vorgegebene Polaritätsausrichtung haben. Die Polaritätsausrichtung kann dabei beliebig gewählt sein. Im vorliegenden Ausführungsbeispiel werden die vier Zellen 24 auf dem Werkstückträger 50 so aufgenommen, dass die Pluspole 26 nach oben zeigen. Dies lässt sich bspw. dadurch erreichen, dass das Handhabungselement 58 jene Zellen greift, deren Pluspol auf einer Seite des Werkstückträgers 50 liegt und das andere Handhabungselemente 56 die Zellen greift, deren Pluspol auf der anderen gegenüberliegenden Seite liegt. An dieser Stelle sei noch angemerkt, dass die beiden Handhabungselemente 56, 58 nicht notwendigerweise jeweils nur Zellen gleicher Polaritätsausrichtung aufnehmen, wie dies in Fig. 5 gezeigt ist. Die Auswahl von Zellen kann beliebig gewählt werden,.

Die Handhabungselemente 56, 58 können Teil einer größeren Handhabungsvorrichtung, bspw. eines Roboters sein, der die nun auch hinsichtlich ihrer Polarität ausgerichteten Zellen beispielsweise in ein größeres Batteriepaket einsetzt.

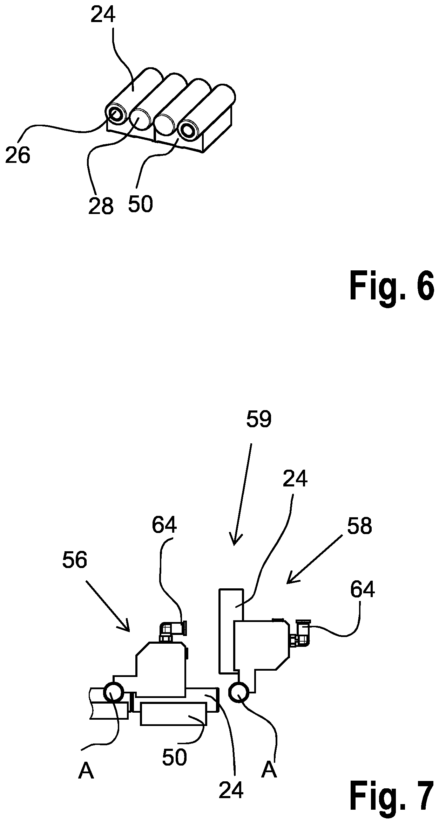

Wie sich aus Figuren 5 und 7 ergibt, weisen die beiden Handhabungselemente 56, 58 Saugelemente 62 auf, die mit Schlauchkupplungen 64 verbunden sind, an die jeweils ein Schlauch zur Erzeugung eines Vakuums im Bereich der Saugelemente 62 erzeugbar ist.

Die beiden Handhabungselemente 56, 58 sind jeweils um eine Drehachse A dreh- bzw. schwenkbar, sodass sie die waagrecht liegenden Zellen auf dem Werkstückträger greifen und in die senkrechte Position bewegen können.

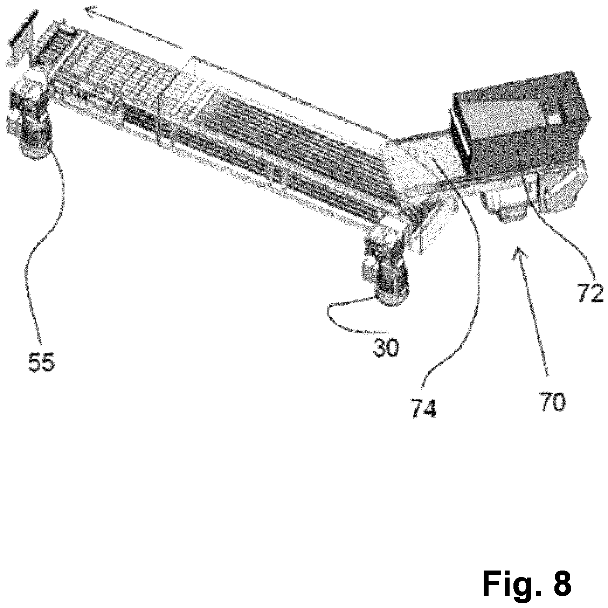

In Figur 8 ist ein Abschnitt der Transportvorrichtung 10, insbesondere die ersten Transporteinrichtung 12, in einer perspektivischen Darstellung gezeigt. Die ersten Transporteinrichtung 12 weist einen elektrischen Antrieb 30, vorzugsweise eine Motor-Getriebeeinheit, auf, der die Transportriemen mit den unterschiedlichen Geschwindigkeiten antreibt. Die unterschiedlichen Geschwindigkeiten der Transportriemen lassen sich durch unterschiedliche Getriebe-Übersetzungen oder durch Verwendung von Servo- oder Frequenz-Umrichtertechnik erzielen. Alternativ können auch Antriebsscheiben mit unterschiedlichen Durchmessern für jeden Transportriemen oder für Gruppen von Transportriemen verwendet werden.

Das Transportband der zweiten Transporteinrichtung 14 wird über einen Motor 55 angetrieben, der in Figur 8 zu erkennen ist. Dieser Motor bewegt das Transportband 54 getaktet, dergestalt, dass das Transportband steht, bis die Zellen auf einen Werkstückträger 50 überführt sind und die Zellen von den Handhabungselemente aufgenommen sind, und dann um eine "Schrittlänge" bewegt wird, um den nächsten Werkstückträger in den Übergabebereich zu bringen.

In Figur 8 ist noch eine Befülleinrichtung 70 zu sehen, die einen Bunker 72 aufweist, der einem Förderband 74 zugeordnet ist. Zellen werden ungeordnet in den Bunker 72 eingefüllt und gelangen dann über das Förderband 74 auf die Transportriemen 20 im Startbereich 16. Die Zellen 24 gelangen folglich ungeordnet auf die Transportriemen.

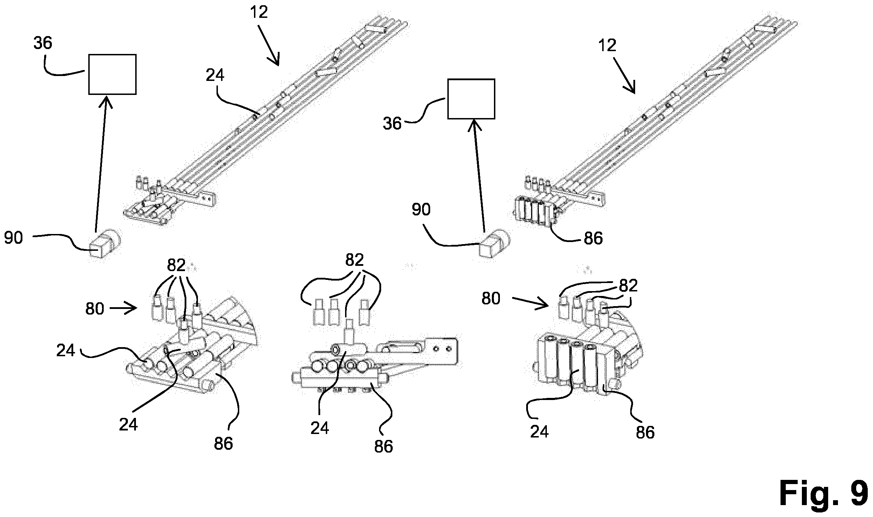

In Fig. 9 ist eine alternative Transportvorrichtung 10` gezeigt, deren Aufbau im wesentlichem dem Aufbau der zuvor beschriebenen Transportvorrichtung 10 entspricht, so dass nachfolgend nur auf die Unterschiede eingegangen werden soll.

Die Transportvorrichtung 10` weist keine zweite Transporteinrichtung auf, die die Zellen 24 direkt aus dem Endbereich abtransportiert. Vielmehr ist im Zielbereich eine Handhabungseinrichtung 80 vorgesehen, die über mehrere Greifelemente 82, bspw. Vakuum-Greifelemente, verfügt, die ausgebildet sind, jeweils eine Zelle 24 zu greifen und zu drehen, um eine gewünschte Pol-Lage der Zelle zu erreichen. Die Zellen 24 liegen auf einer Aufstelleinrichtung 86, die um eine horizontale Achse um 90° kippbar ist. Die Zellen 24 auf der Aufstelleinrichtung 86 können so in eine aufrechte Position gebracht werden, in der sie dann weiter transportiert werden können, bspw. über eine zweite Transporteinrichtung 14.

Zur Erfassung der Pol-Lage der Zellen 24 auf der Aufstelleinrichtung ist ein optischer Sensor, bspw. ein optisches Kamerasystem 90 mit Bildverarbeitung, vorgesehen, das entsprechende Informationen an die Steuerung 36 überträgt. Die Steuerung 36 steuert dann die entsprechenden Greifelemente 82 an, um die gewünschten Zellen 24 von der Aufstelleinrichtung 86 anzuheben, um 180° zu drehen und wieder auf die Aufstelleinrichtung zurück zu legen.

Die Transportvorrichtung 10 bzw. 10` ermöglicht es, Zellen 24 ungeordnet auf Transportriemen aufzubringen und diese dann während der Förderung von einem Startbereich in einen Zielbereich auszurichten und in die zwischen den Transportriemen definierten Spuren zu führen. Über die Ablenkelemente können zudem die einzelnen Spuren gelichmäßig gefüllt werden, so dass im Zielbereich in jeder Spur eine Zelle vorhanden ist. Diese nebeneinander liegenden Zellen werden dann auf einen Werkstückträger überführt und in einen Aufnahmebereich getaktet transportiert. In diesem Aufnahmebereich werden die Zellen von zwei Handhabungselementen gesteuert aufgenommen, so dass die Zellen in einer gewünschter Pol-Lage in einen nachgeordneten Prozess geführt werden können.

Mithilfe der Transportvorrichtung 10, die aus den beiden Transporteinrichtungen 12 und 14 besteht, lassen sich folglich ungeordnet aufgebrachte Zellen 24 auf einfache und kostengünstige Weise ausrichten, auf Werkstückträger 50 überführen und am Ende auch hinsichtlich der Polarität geordnet aufnehmen und weiterverarbeiten.

Die nachfolgenden Klauseln sind nicht als Ansprüche zu verstehen. Sie dienen lediglich der Veranschaulichung und Beschreibung möglicher Ausgestaltungen der Erfindung. Die hierin beschriebenen Merkmale und Kombinationen sollen das Verständnis der Erfindung erleichtern und sind nicht darauf ausgelegt, den Schutzbereich der Erfindung einzuschränken oder abschließend festzulegen.
Klausel 1. Vorrichtung zum Transport von zylindrischen Bauteilen, insbesondere Batteriezellen, von einem Startbereich zu einem Zielbereich, mit
   einer ersten Transporteinrichtung mit mehreren Transportriemen, die beabstandet zueinander angeordnet sind und eine Transportstrecke vom Startbereich zum Zielbereich bilden;
   einer Antriebseinrichtung, die mit den Transportriemen gekoppelt und ausgelegt ist, Transportriemen, insbesondere benachbarte Transportriemen, mit unterschiedlichen Geschwindigkeiten anzutreiben, so dass die Bauteile zumindest im Zielbereich jeweils zwischen zwei benachbarten Transportriemen liegen; und
   einer Befülleinrichtung, die im Startbereich Bauteile in ihrer Ausrichtung ungeordnet auf die Transportriemen bringt.
Klausel 2. Vorrichtung nach Klausel 1, dadurch gekennzeichnet, dass sich die Transportriemen vom Startbereich zum Endbereich erstrecken.
Klausel 3. Vorrichtung nach Klausel 1, dadurch gekennzeichnet, dass die Transportstrecke zwischen Startbereich und Endbereich von mehreren hintereinander angeordneten Transportriemen gebildet ist.
Klausel 4. Vorrichtung nach Klausel 1, 2 oder 3, dadurch gekennzeichnet, dass die Transportriemen einen runden Querschnitt aufweisen.
Klausel 5. Vorrichtung nach einer der vorhergehenden Klauseln, dadurch gekennzeichnet, dass die Transportriemen in einer Transportebene liegen.
Klausel 6. Vorrichtung nach einer der vorhergehenden Klauseln, dadurch gekennzeichnet, dass benachbarte Transportriemen zumindest abschnittsweise auf unterschiedlichen Höhen angeordnet sind.
Klausel 7. Vorrichtung nach einer der Klauseln 1 bis 4, dadurch gekennzeichnet, dass die Transportriemen in unterschiedlichen Transportebenen liegen, vorzugsweise zwei Transportebenen, wobei die Transportriemen paarweise abwechselnd in der einen oder der anderen Transportebene liegen.
Klausel 8. Vorrichtung nach einer der vorhergehenden Klauseln, dadurch gekennzeichnet, dass die Antriebseinrichtung zumindest eine Getriebeeinheit aufweist, die ausgelegt ist, eine erste Untergruppe von Transportriemen mit einer ersten Geschwindigkeit und eine zweite Untergruppe von Transportriemen mit einer zweiten Geschwindigkeit anzutreiben, wobei sich Transportriemen der ersten Untergruppe und Transportriemen der zweiten Untergruppe abwechseln.
Klausel 9. Vorrichtung nach einer der Klauseln 1 bis 7, dadurch gekennzeichnet, dass die Antriebseinrichtung zwei Antriebsmotoren aufweist, wobei ein Antriebsmotor eine erste Untergruppe von Transportriemen mit einer ersten Geschwindigkeit und der andere Antriebsmotor eine zweite Untergruppe von Transportriemen mit einer zweiten Geschwindigkeit antreibt, wobei sich Transportriemen der ersten Untergruppe und Transportriemen der zweiten Untergruppe abwechseln.
Klausel 10. Vorrichtung nach einer der vorhergehenden Klauseln, dadurch gekennzeichnet, dass der Abstand der Transportriemen zueinander einstellbar ist.
Klausel 11. Vorrichtung nach einer der vorhergehenden Klauseln, dadurch gekennzeichnet, dass die Transportriemen unterschiedliche Oberflächenbeschaffenheiten, insbesondere unterschiedliche Reibwerte, aufweisen.
Klausel 12. Vorrichtung nach Klausel 11, dadurch gekennzeichnet, dass benachbarte Transportriemen unterschiedliche Reibwerte aufweisen.
Klausel 13. Vorrichtung nach einer der vorhergehenden Klauseln, dadurch gekennzeichnet, dass die Transportriemen unterschiedliche Durchmesser aufweisen.
Klausel 14. Vorrichtung nach einer der vorhergehenden Klauseln, dadurch gekennzeichnet, dass die Befülleinrichtung einen Bunker zur Aufnahme von vielen Bauteilen und ein Förderband aufweist, wobei das Förderband im Startbereich endet, um Bauteile auf die Transportriemen zu bringen.
Klausel 15. Vorrichtung nach einer der vorhergehenden Klauseln, gekennzeichnet durch eine Verteilungseinrichtung, die ausgelegt ist, Bauteile quer zur Transportrichtung zu verlagern.
Klausel 16. Vorrichtung nach Klausel 15, dadurch gekennzeichnet, dass die Verteilungseinrichtung zwischen Transportriemen vorgesehene Ablenkelemente aufweist, die ausgelegt sind, Bauteile quer zur Transportrichtung gesteuert zu verlagern.
Klausel 17. Vorrichtung nach Klausel 16, dadurch gekennzeichnet, dass ein Ablenkelement als Leitblech oder als Luftimpulsgeber ausgebildet ist.
Klausel 18. Vorrichtung nach Klausel 16 oder 17, gekennzeichnet durch eine Steuereinheit, die die Verteilungseinrichtung derart ansteuert, dass die Bauteile quer zur Transportrichtung verteilt werden.
Klausel 19. Vorrichtung nach einer der vorhergehenden Klauseln, dadurch gekennzeichnet, dass den beiden äußeren Transportriemen jeweils ein Führungselement zugeordnet ist, wobei die Führungselemente ausgelegt sind, als seitliche Begrenzung für die Bauteile zu wirken.
Klausel 20. Vorrichtung nach einer der vorhergehenden Klauseln, dadurch gekennzeichnet, dass im Zielbereich eine zwischen zumindest zwei Positionen bewegbare Halteeinrichtung vorgesehen und ausgelegt ist, in der ersten Position die in den Zielbereich transportierten Bauteile zu stoppen und diese Bauteile in der zweiten Position für einen Weitertransport freizugeben.
Klausel 21. Vorrichtung nach Klausel 20, dadurch gekennzeichnet, dass sich im Zielbereich an die erste Transporteinrichtung eine zweite Transporteinrichtung zum Transport von Werkstückträgern anschließt, derart, dass von der Halteeinrichtung freigegebene Bauteile in einen Werkstückträger überführbar sind.
Klausel 22. Vorrichtung nach Klausel 21, dadurch gekennzeichnet, dass die zweite Transporteinrichtung die Werkstückträger mit den Bauteilen in einen Übergabebereich transportiert, in welchem eine Übergabeeinrichtung vorgesehen und ausgelegt ist, die auf einem Werkstückträger liegenden Bauteile zu greifen und in einer vorgebbaren Ausrichtung weiterzugeben.
Klausel 23. Vorrichtung zum Transport von zylindrischen Bauteilen, insbesondere Batteriezellen, von einem Startbereich zu einem Zielbereich, mit
   einer ersten Transporteinrichtung mit mehreren Transportriemen, die beabstandet zueinander angeordnet sind und eine Transportstrecke vom Startbereich zum Zielbereich bilden;
   einer Antriebseinrichtung, die mit den Transportriemen gekoppelt und ausgelegt ist, Transportriemen anzutreiben, so dass die Bauteile zumindest im Zielbereich jeweils zwischen zwei benachbarten Transportriemen liegen; und
   einer Befülleinrichtung, die im Startbereich Bauteile in ihrer Ausrichtung ungeordnet auf die Transportriemen bringt.
Klausel 24. Vorrichtung nach Klausel 23 und zumindest einer der Klauseln 2 bis 22.
Klausel 25. Verfahren zum Ausrichten von zylindrischen Bauteilen, insbesondere Batteriezellen, mit
   Aufbringen der Bauteile in einem Startbereich einer Transporteinrichtung, die mehrere beabstandet zueinander angeordnete Transportriemen aufweist,
   Transport der Bauteile mittels der Transporteinrichtung zu einem Zielbereich,
   Drehen der Bauteile auf den Transportriemen, so dass jedes Bauteil vollständig zwischen zwei benachbarten Transportriemen liegt, indem benachbarte Transportriemen mit unterschiedlichen Geschwindigkeiten angetrieben werden.

## Patentansprüche

1. Vorrichtung zum Transport von zylindrischen Bauteilen, insbesondere Batteriezellen, von einem Startbereich zu einem Zielbereich, mit
einer ersten Transporteinrichtung (12) mit mehreren Transportriemen (20.1-20.n), die beabstandet zueinander angeordnet sind und eine Transportstrecke vom Startbereich (16) zum Zielbereich (18) bilden;
einer Antriebseinrichtung (30), die mit den Transportriemen (20) gekoppelt und ausgelegt ist, Transportriemen, insbesondere benachbarte Transportriemen, mit unterschiedlichen Geschwindigkeiten anzutreiben, so dass die Bauteile (24) zumindest im Zielbereich jeweils zwischen zwei benachbarten Transportriemen (20) liegen; und
einer Befülleinrichtung (70), die im Startbereich Bauteile in ihrer Ausrichtung ungeordnet auf die Transportriemen (20) bringt.

2. Vorrichtung nach Anspruch 1, **dadurch gekennzeichnet, dass** sich die Transportriemen vom Startbereich zum Endbereich erstrecken.

3. Vorrichtung nach Anspruch 1, **dadurch gekennzeichnet, dass** die Transportstrecke zwischen Startbereich und Endbereich von mehrere hintereinander angeordneten Transportriemen gebildet ist.

4. Vorrichtung nach Anspruch 1, 2 oder 3, **dadurch gekennzeichnet, dass** die Transportriemen (20) einen runden Querschnitt aufweisen.

5. Vorrichtung nach einem der vorhergehenden Ansprüche, **dadurch gekennzeichnet, dass** die Transportriemen (20) in einer Transportebene (21) liegen.

6. Vorrichtung nach einem der vorhergehenden Ansprüche, **dadurch gekennzeichnet, dass** benachbarte Transportriemen (20) zumindest abschnittsweise auf unterschiedlichen Höhen angeordnet sind.

7. Vorrichtung nach einem der Ansprüche 1 bis 4, **dadurch gekennzeichnet, dass** die Transportriemen (20) in unterschiedlichen Transportebenen (21.1, 21.2) liegen, vorzugsweise zwei Transportebenen, wobei die Transportriemen paarweise abwechselnd in der einen oder der anderen Transportebene liegen.

8. Vorrichtung nach einem der vorhergehenden Ansprüche, **dadurch gekennzeichnet, dass** die Antriebseinrichtung (30) zumindest eine Getriebeeinheit aufweist, die ausgelegt ist, eine erste Untergruppe von Transportriemen (20) mit einer ersten Geschwindigkeit und eine zweite Untergruppe von Transportriemen (20) mit einer zweiten Geschwindigkeit anzutreiben, wobei sich Transportriemen der ersten Untergruppe und Transportriemen der zweiten Untergruppe abwechseln.

9. Vorrichtung nach einem der Ansprüche 1 bis 7, **dadurch gekennzeichnet, dass** die Antriebseinrichtung (30) zwei Antriebsmotoren aufweist, wobei ein Antriebsmotor eine erste Untergruppe von Transportriemen (20) mit einer ersten Geschwindigkeit und der andere Antriebsmotor eine zweite Untergruppe von Transportriemen (20) mit einer zweiten Geschwindigkeit antreibt, wobei sich Transportriemen der ersten Untergruppe und Transportriemen der zweiten Untergruppe abwechseln.

10. Vorrichtung nach einem der vorhergehenden Ansprüche, **dadurch gekennzeichnet, dass** der Abstand (D) der Transportriemen (20) zueinander einstellbar ist.

11. Vorrichtung nach einem der vorhergehenden Ansprüche, **dadurch gekennzeichnet, dass** die Transportriemen (20) unterschiedliche Oberflächenbeschaffenheiten, insbesondere unterschiedliche Reibwerte, aufweisen;
wobei bevorzugt benachbarte Transportriemen (20) unterschiedliche Reibwerte aufweisen.

12. Vorrichtung nach einem der vorhergehenden Ansprüche, **gekennzeichnet durch** eine Verteilungseinrichtung (32), die ausgelegt ist, Bauteile quer zur Transportrichtung zu verlagern;
wobei bevorzugt die Verteilungseinrichtung (32) zwischen Transportriemen (20) vorgesehene Ablenkelemente (34) aufweist, die ausgelegt sind, Bauteile quer zur Transportrichtung gesteuert zu verlagern;
wobei bevorzugt ein Ablenkelement als Leitblech oder als Luftimpulsgeber ausgebildet ist;
wobei bevorzugt eine Steuereinheit (36) vorgesehen ist, die die Verteilungseinrichtung (32) derart ansteuert, dass die Bauteile quer zur Transportrichtung verteilt werden.

13. Vorrichtung nach einem der vorhergehenden Ansprüche, **dadurch gekennzeichnet, dass** im Zielbereich eine zwischen zumindest zwei Positionen bewegbare Halteeinrichtung (38, 40) vorgesehen und ausgelegt ist, in der ersten Position die in den Zielbereich transportierten Bauteile zu stoppen und diese Bauteile in der zweiten Position für einen Weitertransport freizugeben;
wobei sich im Zielbereich an die erste Transporteinrichtung (12) eine zweite Transporteinrichtung (14) zum Transport von Werkstückträgern (50) anschließt, derart, dass von der Halteeinrichtung freigegebene Bauteile in einen Werkstückträger (50) überführbar sind; und
wobei die zweite Transporteinrichtung (14) die Werkstückträger (50) mit den Bauteilen in einen Übergabebereich transportiert, in welchem eine Übergabeeinrichtung (59, 56, 58) vorgesehen und ausgelegt ist, die auf einem Werkstückträger liegenden Bauteile zu Greifen, insbesondere über Vakuum, und in einer vorgebbaren Ausrichtung weiterzugeben.

14. Vorrichtung zum Transport von zylindrischen Bauteilen, insbesondere Batteriezellen, von einem Startbereich zu einem Zielbereich, mit
einer ersten Transporteinrichtung (12) mit mehreren Transportriemen (20.1-20.n), die beabstandet zueinander angeordnet sind und eine Transportstrecke vom Starbereich (16) zum Zielbereich (18) bilden;
einer Antriebseinrichtung (30), die mit den Transportriemen (20) gekoppelt und ausgelegt ist, Transportriemen anzutreiben, so dass die Bauteile (24) zumindest im Zielbereich jeweils zwischen zwei benachbarten Transportriemen (20) liegen; und
einer Befülleinrichtung (70), die im Startbereich Bauteile in ihrer Ausrichtung ungeordnet auf die Transportriemen (20) bringt.

15. Verfahren zum Ausrichten von zylindrischen Bauteilen, insbesondere Batteriezellen, mit
Aufbringen der Bauteile in einem Startbereich einer Transporteinrichtung, die mehrere beabstandet zueinander angeordnete Transportriemen aufweist, Transport der Bauteile mittels der Transporteinrichtung zu einem Zielbereich, Drehen der Bauteile auf den Transportriemen, so dass jedes Bauteil vollständig zwischen zwei benachbarten Transportriemen liegt, indem benachbarte Transportriemen mit unterschiedlichen Geschwindigkeiten angetrieben werden.
